# EUROPEAN PATENT APPLICATION

(11) **EP 4 258 797 A1**
(43) Date of publication of application: **11.10.2023**
(21) Application number: 21918588.1
(22) Date of filing: 15.01.2021
(51) Int. Cl.: H04W 74/08

(54) **INFORMATION INDICATION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); HE, Chuanfeng, Dongguan, Guangdong 523860 (CN)
(74) Representative: Taor, Simon Edward William
(86) International application number: PCT/CN2021/072240
(87) International publication number: WO 2022/151384

(57) **Abstract**

The present application relates to the field of mobile communications, and disclosed are an information indication method and apparatus, a device, and a medium. The method comprises: a terminal receives a random access response (RAR) or the scheduling information of the RAR, the RAR or the scheduling information of the RAR indicating the number of times of repetition of a message 3. By indicating the number of times of repetition of the message 3 in the RAR or the scheduling information of the RAR, the present application can enable the terminal to be capable of determining the number of times of repetition of the message 3 before transmitting the message 3, thereby introducing a repeated transmission mechanism in the process of transmitting the message 3, providing coverage enhancement for the terminal located at the edge of a cell, and improving the success rate of a random access process.

## Description

### TECHNICAL FIELD

This application relates to the field of mobile communications, and in particular, to an information indication method, apparatus, device, and storage medium.

### BACKGROUND

The random access procedure is a very important procedure in the mobile communication system. The random access procedure includes a four-step random access procedure and a two-step random access procedure.

In the four-step random access procedure, message (msg) 3 is an uplink message sent by the terminal to the network device, and is mainly used for notifying the network device of an event that triggers the random access procedure. In the related art, it is expected to introduce a repeated transmission mechanism for msg 3. The repeated transmission mechanism refers to a mechanism in which the sender sends the same message to the receiver several times continuously to increase the probability of successful reception by the receiver.

When the repeated transmission mechanism is introduced, how the network device indicates the number of repetitions of msg 3 to the terminal is a technical problem to be solved urgently.

### SUMMARY

Embodiments of this application provide an information indication method, apparatus, device, and storage medium.

According to an aspect of this application, an information indication method is provided and includes:
receiving a random access response or scheduling information of the random access response, wherein a repetition number of message (msg) 3 is indicated in the random access response or the scheduling information of the random access response.

According to an aspect of this application, an information indication method is provided and includes:
sending a random access response or scheduling information of the random access response, wherein a repetition number of msg 3 is indicated in the random access response or the scheduling information of the random access response.

According to an aspect of this application, an information indication apparatus is provided and includes:
a receiving module, configured to receive a random access response or scheduling information of the random access response, wherein a repetition number of msg 3 is indicated in the random access response or the scheduling information of the random access response.

According to an aspect of this application, an information indication apparatus is provided and includes:
a sending module, configured to send a random access response or scheduling information of the random access response, wherein a repetition number of msg 3 is indicated in the random access response or the scheduling information of the random access response.

According to an aspect of this application, a terminal is provided and includes: a processor; a transceiver coupled to the processor; and a memory configured to store executable instructions of the processor, where the processor is configured to load and execute the executable instructions, thereby implementing the information indication method according to the aspects as described above.

According to an aspect of this application, a network device is provided and includes: a processor; a transceiver coupled to the processor; and a memory configured to store executable instructions of the processor, where the processor is configured to load and execute the executable instructions, thereby implementing the information indication method according to the aspects as described above.

According to an aspect of this application, a computer-readable storage medium is provided and stores executable instructions, where the executable instructions are loaded and executed by a processor to implement the information indication method according to the aspects as described above.

According to an aspect of this application, a computer program product or a computer program is provided, and the computer program product or computer program includes computer instructions. The computer instructions are stored in a computer-readable storage medium, and a processor of a computer device reads the computer instructions from the computer-readable storage medium and executes the computer instructions, thereby causing the computer device to implement the information indicating method according to the aspects as described above.

According to an aspect of this application, a chip is provided and includes a programmable logic circuit or a program, and the chip is configured to implement the information indication method according to the aspects as described above.

The technical solutions according to some embodiments of this application may include the following beneficial effects.

By indicating the repetition number of msg 3 in the RAR or RAR scheduling information, the terminal can specify the repetition number of msg 3 before sending msg 3, so that a repeated transmission mechanism is introduced in the transmission process of msg 3, thereby providing coverage enhancement for terminals at the edge of cell and improving the success rate of the random access procedure.

### BRIEF DESCRIPTION OF THE DRAWINGS

In order to illustrate the technical solutions in the embodiments of this application more clearly, the following briefly introduces the drawings that are used in the description of the embodiments. Obviously, the drawings in the following description are only some embodiments of this application. For those of ordinary skill in the art, other drawings can also be obtained from these drawings without creative effort.
FIG. 1 is a flowchart of a four-step random access procedure according to some embodiments of this application.
FIG. 2 is an architecture diagram of a mobile communication system according to some embodiments of this application.
FIG. 3 is a flowchart of an information indication method according to some embodiments of this application.
FIG. 4 is a flowchart of an information indicating method according to some embodiments of this application.
FIG. 5 is a schematic diagram of a PRB indication on ULBWP according to some embodiments of this application.
FIG. 6 is a flowchart of an information indication method according to some embodiments of this application.
FIG. 7 is a schematic diagram illustrating DCI format 1_0 of the first version according to some embodiments of this application.
FIG. 8 is a schematic diagram illustrating DCI format 1_0 of the second version according to some embodiments of this application.
FIG. 9 is a flowchart of an information indication method according to some embodiments of this application.
FIG. 10 is a flowchart of an information indication method according to some embodiments of this application.
FIG. 11 is a flowchart of an information indication method according to some embodiments of this application.
FIG. 12 is a block diagram of an information indicating apparatus according to some embodiments of this application.
FIG. 13 is a block diagram of an information indicating apparatus according to some embodiments of this application.
FIG. 14 is a block diagram of a communication device shown according to some embodiments of this application.

### DETAILED DESCRIPTION

In order to make the objectives, technical solutions and advantages of this application clearer, some embodiments of this application will be further described in detail below with reference to the accompanying drawings.

Before the methods according to some embodiments of this application are introduced in detail, related terms and implementation environments involved in some embodiments of this application are briefly introduced.

Random access procedure refers to a procedure from when the terminal sends the random access preamble and starts trying to access the network, until the basic signaling connection is established between the terminal and the network. The random access procedure is used for enabling the terminal to establish data communication with the network side. In the New Radio (NR) system, two types of random access procedures are mainly supported, namely, the four-step random access procedure and the two-step random access procedure.

The four-step random access procedure mainly includes the following steps.

In step 1, the terminal sends to the network device a message 1 (msg1): a random access preamble.

The terminal sends the selected random access preamble on the time-frequency resource of a selected Physical Random Access Channel (PRACH). The network device may estimate, based on the random access preamble, an uplink delay (Timing) and a grant size required by the terminal to transmit msg 3.

In step 2, the network device sends to the terminal a msg 2 (msg2): a random access response (RAR).

After the terminal sends msg 1, an RAR window is started, and the Physical Downlink Control Channel (PDCCH) is monitored in the RAR window. The PDCCH is a PDCCH scrambled with a random access radio network temporary identifier (RA-RNTI).

After successfully detecting the PDCCH scrambled by the RA-RNTI, the terminal may obtain the Physical Downlink Share Channel (PDSCH) scheduled by the PDCCH, and the PDSCH contains the RAR.

The RAR includes: Backoff Indicator (BI), used for indicating the backoff time for retransmission of msg 1; Random Access Preamble Identifier (RAPID), used for indicating the random access preamble; Timing Advance group (TAG), used for adjusting the uplink timing; uplink grant (UL grant), used for scheduling the uplink resource indication of msg 3; Temporary Cell-Radio Network Temporary Identity (Temporary C- NTI), used for scrambling the PDCCH (Initial Access) of msg 4.

In step 3, the terminal sends to the network device a msg 3: scheduling transmission.

The msg 3 is mainly used for notifying the network device of an event that triggers the random access procedure. Exemplarily, if the event is an initial access random procedure, the UE ID and establishment cause may be carried in msg 3. If the event is RRC reestablishment, the connected UE identity and establishment cause may be carried. The msg 3 is carried by the Physical Uplink Shared Channel (PUSCH).

In step 3, the network device sends to the terminal a msg 4: a contention resolution message. The msg 4 is used for contention resolution.

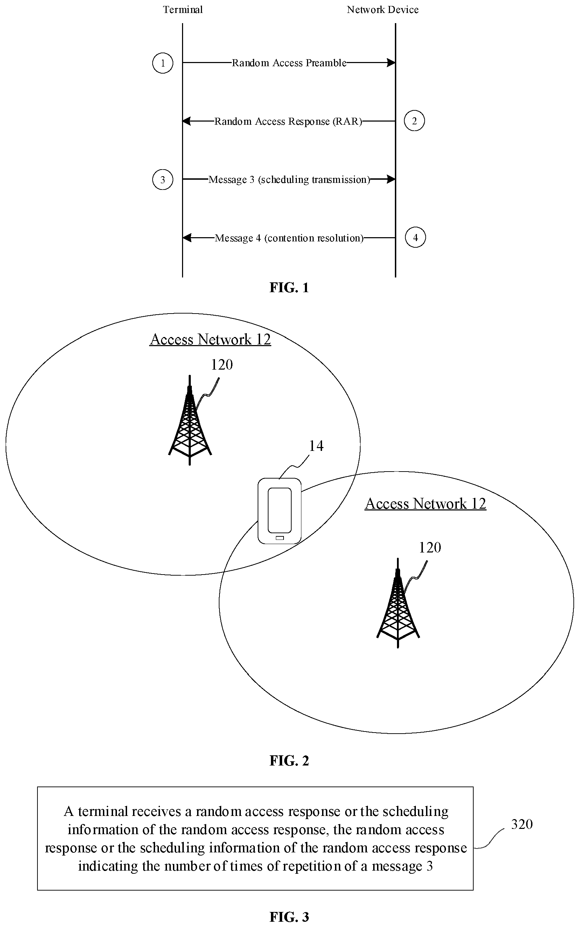

FIG. 2 shows a schematic diagram of a system architecture according to some embodiments of this application. The system architecture may include: a terminal 10 and a network device 20.

The number of terminals 10 is typically multiple, and one or more terminals 10 may be distributed in a cell managed by each network device 20. The terminal 10 may include various handheld devices, vehicle-mounted devices, wearable devices, computing devices or other processing devices connected to the wireless modem with wireless communication functions, as well as various forms of user equipment (UE), mobile stations (MS) and so on. For convenience of description, in the embodiments of this application, the devices mentioned above are collectively referred to as terminals.

The network device 20 is a device deployed in the access network to provide the terminal 10 with a wireless communication function. The network device 20 may include various forms of macro base stations, micro base stations, relay stations, access points, and the like. In systems using different wireless access technologies. The names of devices with network device functions may be different, for example, in 5G NR systems, they are called gNodeB or gNB or access network devices. As communications technology evolves, the name "network device" may change. For the convenience of description, in the embodiments of this application, the devices mentioned above for providing the wireless communication function for the terminal 10 are collectively referred to as network devices.

The" 5G NR system" in the embodiments of this disclosure may also be referred to as 5G system or NR system, but those skilled in the art can understand its meaning. The technical solutions described in the embodiments of this disclosure may be applicable to the 5G NR system, and may also be applicable to the subsequent evolution system of the 5G NR system.

FIG. 3 shows a flowchart of an information indication method according to some embodiments of this application. In some embodiments, the method is applied to a terminal as an example for illustration. The method may be applied in the four-step random access procedure and includes following content.

In step 302, the terminal receives a random access response or scheduling information of the random access response, where a repetition number of msg 3 is indicated in the random access response or the scheduling information of the random access response.

This step includes at least one of the following two manner.

In the first manner, the terminal receives the RAR, and the RAR indicates the repetition number of msg 3. Exemplarily, the repetition number of msg 3 is indicated in the uplink scheduling grant (UL grant) or scheduling grant (grant) field of the RAR.

In the second manner, before receiving the RAR, the terminal may also need to receive the scheduling information with respect to the RAR from the network device, where the repetition number of msg 3 is indicated in the scheduling information.

Exemplarily, the repetition number of msg 3 is the number of repeated transmissions of the physical uplink shared channel (PUSCH) carrying msg 3 in multiple consecutive time slots. The repetition number of msg 3 may also be referred to as the repetition number of msg 3 PUSCH.

To sum up, in the method according to some embodiments, by indicating the repetition number of msg 3 in the RAR or RAR scheduling information, the terminal can specify the repetition number of msg 3 before sending msg 3, so that a repeated transmission mechanism is introduced in the transmission process of msg 3, thereby providing coverage enhancement for terminals at the edge of cell and improving the success rate of the random access procedure.

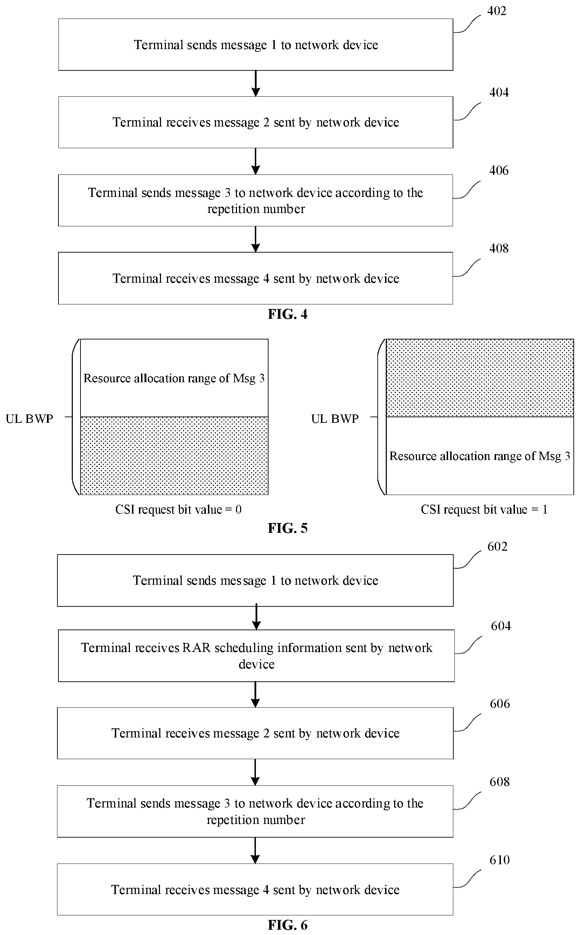

FIG. 4 shows a flowchart of an information indication method according to some other embodiments of this application. In some embodiments, the method is applied to a terminal as an example for illustration. The method may be applied in the four-step random access procedure and include following content.

In step 402, the terminal sends to the network device the msg 1: random access preamble.

The network device receives msg 1 sent by the terminal. The network device sends msg 2 to the terminal.

In step 404, the terminal receives the msg 2: RAR sent by the network device, and the RAR indicates the repetition number of msg 3.

In step 406, the terminal sends msg 3 to the network device according to the repetition number.

The network device receives msg 3 sent by the terminal according to the repetition number. The network device sends msg 4 to the terminal.

In step 408, the terminal receives msg 4: contention resolution message sent by the network device.

There is a first bit field (or a first information field) in the RAR message format, and the first bit field is used for indicating the repetition number of msg 3. Exemplarily, the first bit field includes: bits in the random access response scheduling grant field (RARgrant). In other words, the message format of RAR includes a ULgrant field or a grant field, and one or more bits in the ULgrant field or the grant field are used for indicating the repetition number of msg 3.

The above solutions are described below based on two improved versions of the RARgrant format.

The RARgrant format of the initial version refers to the RARgrant format specified in the communication protocol of the R15 version or the R16 version.

The RARgrant format of the first version refers to an improved RAR GRANT format formed by multiplexing some bits in the RARgrant format specified in the communication protocol of the R15 version or the R16 version.

The RARgrant format of the second version refers to an improved RARgrant format specified in the communication protocol of the subsequent evolution of the R15 version or the R16 version, for example, the RARgrant format of the R17 or R18 version.

As to the RARgrant format of the initial version: in the RARgrant format of the initial version, there are 27 bits designed for the RARgrant field, as shown in Table 1 below.

**Table 1: Information field size of RARgrant field**

| RAR grant filed | Number of bits |
|---|---|
| Frequency hopping flag | 1 |
| PUSCH frequency resource allocation | 14 |
| PUSCH time resource allocation | 4 |
| Modulation and Coding Scheme (MCS) | 4 |
| Transmission Power Control (TPC) command for PUSCH | 3 |
| CSIrequest | 1 |

### As to RARgrant format of the first version:

Exemplarily, the number of bits in the RARgrant format of the first version and the number of bits in the RAR GRANT format of the initial version are the same. For example, the number of bits in the RARgrant field in both versions of the RARgrant formats is 27.

On the basis of the RARgrant format of the initial version, it is considered to reuse (or called multiplex) some bit fields in the above RARgrant field to indicate the repetition number of msg 3. Multiplexing modes include but are not limited to at least one of the following three modes.

Mode 1 refers to multiplexing the CSIrequest field.

In the RAR GRANT format of the first version, although the CSIrequest field exists, it is not actually used for CSIrequests. The first bit field includes the CSIrequest field, and the first bit field is multiplexed to indicate the repetition number of msg 3.

The CSIrequest field includes 1 bit. When the CSIrequest field is a first value, it is multiplexed to indicate the repetition number of msg 3 as a first repetition number. When the CSIrequest field is a second value, it is multiplexed to indicate the repetition number of msg 3 as a second repetition number. In other words, two repetition numbers of msg 3 can be indicated by 1 bit. The repetition number of msg 3 corresponding to different values of the bit may be preset or preconfigured. For example, possible repetition numbers corresponding to msg 3 are N1 and N2, then the value "0" of this bit may correspond to the repetition number N1, and the value "1" of this bit may correspond to the repetition number N2. N1 and N2 are positive integers, for example, N1=4, N2=8.

Mode 2 refers to multiplexing some bits of the PUSCH frequency resource allocation field.

In the RARgrant format of the first version, the PUSCH frequency resource allocation field is used for allocation of frequency domain resource. The PUSCH frequency resource allocation field contains 14 bits, which may be used for uplink resource allocation in a bandwidth part (BWP) that contains at most 180 physical resource blocks (PRBs), to transmit msg 3. (Note: the above 180 PRBs are determined based on NR resource allocation type 1.)

In this indication mode, the first bit field includes: partial bit(s) of the PUSCH frequency resource allocation field. The partial bit(s) are multiplexed to indicate the repetition number of msg 3. Exemplarily, the partial bit(s) include 1 bit or 2 bits. When the partial bit(s) include 1 bit, two different values of 1 bit are multiplexed to indicate two repetition numbers of msg 3. When the partial bit(s) include 2 bits, four different values of 2 bits are multiplexed to indicate four repetition numbers of msg 3. Optionally, four different values of 2 bits are used for indicating at most four repetition numbers of msg 3, or only three repetition numbers or two repetition numbers.

Optionally, the four different values correspond to the same values as the four repetition numbers, respectively. For example, when the value is 2, the repetition number is 2. Alternatively, there is a correspondence between the four different values and the values of the four repetition numbers. An example is shown in the following table.

**Table 2**

| Bit Value | Repetition Number |
|---|---|
| 00 | 2 |
| 01 | 4 |
| 10 | 6 |
| 11 | 8 |

In this indication mode, the number of bits used for frequency resource allocation may need to be compressed. For example, 14 bits are compressed into 12 bits, then 2 bits can be spared to indicate the repetition number of msg 3. The number of spare bits determines the potential repetition number of msg 3 that can be indicated.

After the number of bits used for frequency resource allocation is compressed to 12 bits, it may be used for uplink resource allocation within a BWP containing at most 90 PRBs to transmit msg 3. Therefore, the flexibility of scheduling suffers a certain loss. However, considering that the number of terminals that need coverage enhancement is small, the overall impact on the communication system is not large.

In order to reduce the impact on the frequency resource allocation of msg 3 after the number of bits used for frequency resource allocation is compressed to 12 bits, the CSIrequest field may optionally be used for indicating the position(s), on the uplink BWP (ULBWP), of n PRB(s) indicated by the compressed 12 bits. It is assumed that the remaining bits, except for the partial bit(s), in the PUSCH frequency resource allocation field are used for indicating n PRBs, where n is a positive integer, for example, n is 90. When the CSIrequest field is a first value, the CSIrequest field is multiplexed to indicate that the n PRBs are located at a first position of the ULBWP; and when the CSIrequest field is a second value, it is multiplexed to indicate that the n PRBs are located at a second position of the ULBWP.

For example, when the bit value of the CSIrequest field is "0", it indicates that the n PRBs are located at the upper part of the ULBWP, that is, the PRB with the highest frequency that can be indicated by the remaining bits of the PUSCH frequency resource allocation field is a PRB with the highest frequency in the ULBWP. Otherwise, when the bit value of the information field in the CSIrequest is "1", it indicates that the n PRBs are located at the lower part of the ULBWP, that is, the PRB with the lowest frequency that can be indicated by the remaining bits of the compressed PUSCH frequency resource allocation field is a PRB with the lowest frequency in the ULBWP, as shown in FIG. 5.

Mode 3 refers to multiplexing the CSIrequest field and multiplexing partial bit(s) in the PUSCH frequency resource allocation field.

In this indication mode, the first bit and the second bit in the RARgrant field are multiplexed to indicate the repetition number of msg 3. The first bit is a bit(s) in the CSIrequest field, and the second bit is partial bit(s) in the PUSCH frequency resource allocation field.

For example, 1 bit in the PUSCH frequency resource allocation field and 1 bit in the CSIrequest field are multiplexed simultaneously. Alternatively, 2 bits in the PUSCH frequency resource allocation field and 1 bit in the CSIrequest field are simultaneously multiplexed.

When the first bit and the second bit are jointly used for the indication, the first bit is a high-order bit, and the second bit is a low-order bit; or, the first bit is a low-order bit, and the second bit is a high-order bit.

To sum up, in the indication method according to some embodiments, the indication of the repetition number of msg 3 is realized by multiplexing some bit(s) in the RARgrant. On the one hand, the load is not increased, and the number of bits of the RARgrant does not need to be modified, so as to be compatible with the existing RAR format design. Other the other hand, the repetition number of msg 3 can be indicated with respect to each random access preamble or each terminal, thereby realizing accurate scheduling of the repetition number of msg 3 according to the channel condition of user (for example, the channel quality of the terminal is obtained based on reception of the random access preamble).

In the case of using the mode 1, the actually unused CSIrequest field can be effectively used, but this mode may only indicate two repetition numbers at most. In the case of using the mode 2, although the PUSCH frequency resource allocation field is compressed, more types of repetition numbers, such as four or eight repetition numbers, can be indicated. Moreover, in the case of mode 2, the CSIrequest field may be combined to reduce the impact on the frequency domain resource indication of msg 3 after the PUSCH frequency resource allocation field is compressed. In the case of using the mode 3, it can not only indicate more types of repetition numbers, but also reduce the compression of the PUSCH frequency resource allocation field.

### As to RARgrant format of the second version:

The number of bits of RARgrant format of the second version, the number of bits of RARgrant format of the first version, and the number of bits of RARgrant format of the initial version are all the same. Exemplarily, in the RARgrant format of the second version, 27 bits are also designed for the RARgrant field.

Part of the bit field in the above RARgrant field is used for indicating the repetition number of msg 3. Indication modes include but are not limited to at least one of the following three modes.

In mode 4, the first bit field includes the first bit of the RARgrant field, and the number of bits in the RARgrant field is 27.

Exemplarily, the RARgrant field does not include the CSIrequest field.

**Table 3: Information field size of RARgrant field**

| RAR grant filed | Number of bits |
|---|---|
| Frequency hopping flag | 1 |
| PUSCH frequency resource allocation | 14 |
| PUSCH time resource allocation | 4 |
| Modulation and Coding Scheme (MCS) | 4 |
| Transmission Power Control (TPC) command for PUSCH | 3 |
| Repetition number of msg 3 | 1 |

Follows should be noted:
1. The above table does not limit the arrangement order of each information field. Those skilled in the art may determine the arrangement order of each of the above information fields according to the design requirements.
2. Improvements related to the three fields "Repetition number of msg 3" "CSIrequest" and "PUSCH frequency resource allocation" are discussed in some embodiments. In the case of making other improvements in other information fields, the meaning or the number of bits in the other information fields in the above table may change. However, the protection scope of the embodiments should not be affected, and this table is only a schematic illustration.

When the first bit is a first value, it is multiplexed to indicate the repetition number of msg 3 as a first repetition number; when the first bit is a second value, it is multiplexed to indicate the repetition number of msg 3 as a second repetition number. For example, the possible repetition numbers corresponding to msg 3 are N1 and N2, then the value "0" of this bit may correspond to N1, and the value "1" of this bit may correspond to N2. Herein, N1 and N2 are positive integers, for example, N1=4, N2=8.

In mode 5, the first bit field includes the second bit of the RARgrant, and a sum of the numbers of bits of the PUSCH frequency resource allocation field and the second bit of the RARgrant field is less than or equal to 14.

**Table 4: Information field size of RARgrant field**

| RAR grant filed | Number of bits |
|---|---|
| Frequency hopping flag | 1 |
| PUSCH frequency resource allocation | 14-m |
| PUSCH time resource allocation | 4 |
| Modulation and Coding Scheme (MCS) | 4 |
| Transmission Power Control (TPC) command for PUSCH | 3 |
| Repetition number of msg 3 | m |
| CSIrequest | 1 |

Follows should be noted:
1. The above table does not limit the arrangement order of each information field. Those skilled in the art may determine the arrangement order of each of the above information fields according to the design requirements.
2. Improvements related to the three fields "Repetition number of msg 3" "CSIrequest" and "PUSCH frequency resource allocation" are discussed in some embodiments. In the case of making other improvements in other information fields, the meaning or the number of bits in the other information fields in the above table may change. However, the protection scope of the embodiments should not be affected, and this table is only a schematic illustration.
3. When the PUSCH frequency resource allocation field does not involve other improvements, the sum of the numbers of bits of the PUSCH frequency resource allocation field and the second bit is equal to 14. When the PUSCH frequency resource allocation field involves other improvements, the sum of the numbers of bits of the PUSCH frequency resource allocation field and the second bit may be less than 14, or even greater than 14.

Exemplarily, the above m is a positive integer not greater than 13, for example, m is 1 or 2.

When the second bit includes 1 bit, two different values of 1 bit are multiplexed to indicate two repetition numbers of msg 3. When the second bit includes 2 bits, four different values of 2 bits are multiplexed to indicate four repetition numbers of msg 3. Optionally, four different values of 2 bits are used for indicating at most four repetition numbers of msg 3, or only three repetition numbers or two repetition numbers.

Optionally, the four different values correspond to the same values as the four repetition numbers, respectively. For example, when the value is 2, the repetition number is 2. Alternatively, there is a correspondence between the four different values and the values of the four repetition numbers.

In some embodiments, the third bit is used in the RARgrant field to indicate the positions of n PRBs, indicated by the PUSCH frequency resource allocation, on the ULBWP.

**Table 5: Information field size of RARgrant field**

| RAR grant filed | Number of bits |
|---|---|
| Frequency hopping flag | 1 |
| PUSCH frequency resource allocation | 14-m |
| PUSCH time resource allocation | 4 |
| Modulation and Coding Scheme (MCS) | 4 |
| Transmission Power Control (TPC) command for PUSCH | 3 |
| Repetition number of msg 3 | m |
| Position of n PRBs, indicated by the PUSCH frequency resource allocation, on the ULBWP | 1 |

It is assumed that the PUSCH frequency resource allocation field is used for indicating n PRBs, where n is a positive integer, for example, n is 90. When the third bit is a first value, the third bit is used for indicating that the n PRBs are located in a first position of the ULBWP; when the third bit is a second value, it is used for indicating that the n PRBs are located in a second position of the ULBWP.

For example, the value "0" of the third bit indicates that the n PRBs are located at the upper part of the ULBWP, that is, the PRB with the highest frequency that can be indicated by the PUSCH frequency resource allocation field is a PRB with the highest frequency in the ULBWP. Otherwise, when the bit value of the information field in the CSIrequest is "1", it indicates that the n PRBs are located at the lower part of the ULBWP, that is, the PRB with the lowest frequency that can be indicated by the PUSCH frequency resource allocation field is a PRB with the lowest frequency in the ULBWP, as shown in FIG. 5.

In mode 6, the first bit field includes the first bit and the second bit of the RARgrant field, the number of bits in the RARgrant field is 27. The RARgrant field does not include the CSIrequest field, and a sum of the numbers of bits of the PUSCH frequency resource allocation field and the second bit s less than or equal to 14.

**Table 6: Information field size of RARgrant field**

| RAR grant filed | Number of bits |
|---|---|
| Frequency hopping flag | 1 |
| PUSCH frequency resource allocation | 14-m |
| PUSCH time resource allocation | 4 |
| Modulation and Coding Scheme (MCS) | 4 |
| Transmission Power Control (TPC) command for PUSCH | 3 |
| Repetition number of msg 3 | m+1 |

The first bit includes 1 bit, and the second bit includes m bit(s). The first bit and the second bit are adjacent or non-adjacent bits in the RARgrant field. Assuming that the first bit and the second bit are not adjacent in the RARgrant field, when the first bit and the second bit are jointly used for indication, the first bit is a high-order bit, and the second bit is a low-order bit. Alternatively, the first bit is low-order bits, the second bit is the high-order bit.

To sum up, in the indication method according to some embodiments, the indication of the repetition number of msg 3 is realized by multiplexing some bit(s) in the RARgrant. On the one hand, the load is not increased, and the number of bits of the RARgrant does not need to be modified, so as to be compatible with the existing RAR format design. Other the other hand, the repetition number of msg 3 can be indicated with respect to each random access preamble or each terminal, thereby realizing accurate scheduling of the repetition number of msg 3 according to the channel condition of user (for example, the channel quality of the terminal is obtained based on reception of the random access preamble).

It should be noted that, the forgoing mode 1 corresponds to the mode 4, the forgoing mode 2 corresponds to the mode 5, and the forgoing mode 3 corresponds to the mode 6. Another point that needs to be explained lies in that, when the terminal is a terminal that does not need coverage enhancement (that is, does not need the repeated transmission of msg 3), the terminal interprets the RARgrant field according to the RARgrant format of the initial version; and when the terminal is a terminal that needs coverage enhancement, the terminal interprets the RARgrant field according to the RARgrant format of the first version or the second version as described above.

FIG. 6 shows a flowchart of an information indication method according to some other embodiments of this application. In some embodiments, the method is applied to a terminal as an example for illustration. The method may be applied in the four-step random access procedure and include the following content.

In step 602, the terminal sends to the network device a msg 1: a random access preamble.

The network device receives msg 1 sent by the terminal. The network device sends the scheduling information of msg 2 to the terminal. Exemplarily, the scheduling information is downlink control information (DCI).

In step 604, the terminal receives the RAR scheduling information sent by the network device, where the RAR scheduling information indicates the repetition number of msg 3.

The network device sends msg 2 to the terminal.

In step 606, the terminal receives the msg 2: RAR sent by the network device according to the indication of the scheduling information, where the RAR indicates the repetition number of msg 3.

In step 608, the terminal sends msg 3 to the network device according to the repetition number.

The network device receives msg 3 sent by the terminal according to the repetition number. The network device sends msg 4 to the terminal.

In step 610, the terminal receives msg 4: contention resolution message, sent by the network device.

The above method is described below using two improved versions of scheduling information formats.

The scheduling information format of the initial version refers to the scheduling information format specified in the communication protocol of the R15 version or the R16 version.

The scheduling information format of the first version refers to an improved format used for indicating the repetition number of msg 3 by multiplexing some bits in the scheduling information format specified in the communication protocol of the R15 version or the R16 version.

The scheduling information format of the second version refers to the scheduling information format specified in the communication protocol of the subsequent evolution of the R15 version or the R16 version, for example, the DCI message format of the R17 or R18 version.

### As to the scheduling information format of the initial version:

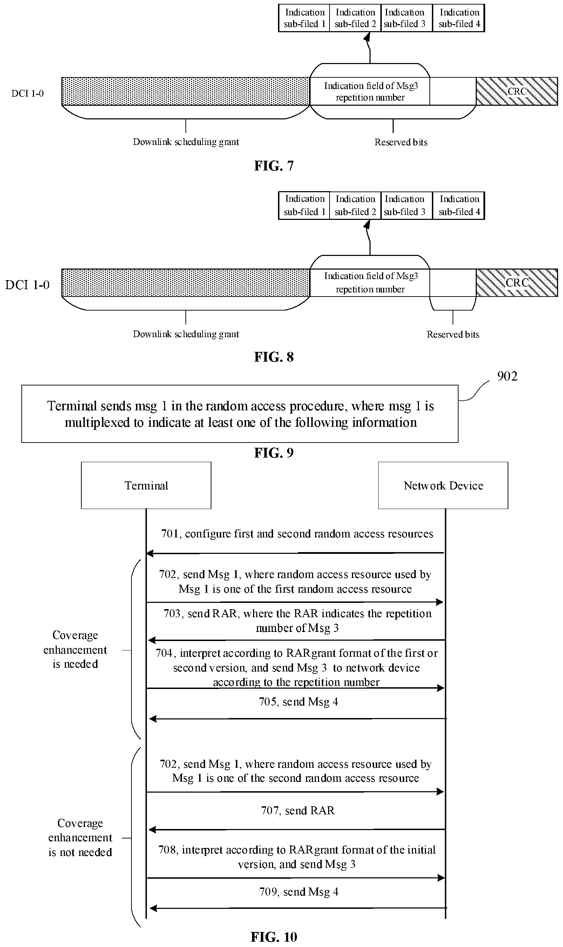

Taking the scheduling information of the initial version being the DCI format 1_0 specified in the communication protocol of the R15 version or the R16 version as an example, the DCI format 1_0 has 16 reserved bits unused, as shown in FIG. 7. There are 16 reserved bits between the downlink scheduling grant (DLgrant) and the cyclic redundancy check (CRC).

### As to the scheduling information format of the first version:

It is considered to multiplex all or part of the reserved bits in the scheduling information format of the initial version, and the multiplexed reserved bits are used for indicating the repetition number of msg 3. The second bit field includes: multiple bits in the reserved bits of the DCI, where the multiple bits are in one-to-one correspondence with multiple terminals. Alternatively, among the reserved bits of the DCI, there are multiple bit groups, and the multiple bit groups are in one-to-one correspondence with multiple terminals.

The terminal determines, based on a user group or a preamble group of the random access preamble, a target bit among the multiple bits or a target bit group among the multiple bit groups. The target bit is a bit corresponding to the current terminal, and the target bit group is a bit (group) corresponding to the current terminal in the multiple bit groups. The correspondence between the random access preamble group and the target bit, the correspondence between the user group and the target bit, the correspondence between the random access preamble group and the target bit group, and the correspondence between the user group and the target bit group may be predefined by the communication protocol or preconfigured by the network device.

When each terminal corresponds to one bit, the bit may indicate two repetition numbers of msg 3. When each terminal corresponds to multiple bits, the multiple bits may indicate multiple repetition numbers of msg 3. For example, 2 bits can indicate up to four repetition numbers, and 3 bits can indicate up to eight repetition numbers.

### As to scheduling information format of the second version:

Taking the scheduling information of the second version being the DCI format 1_0 specified in the subsequently evolved communication protocol as an example, the second bit field includes the fourth bit, and a sum of the fourth bit and the reserved bits is less than or equal to 16 bits, as shown in FIG. 8. Exemplarily, in the case that the reserved bits do not involve improvements other than those described in this application, the sum of the numbers of the fourth bit and the reserved bits is equal to 16 bits. In the case that the reserved bits involve improvements other than those described in this application, the sum of the number of bits of the fourth bit and the reserved bits may be less than 16 bits, or even more than 16 bits.

Taking the fourth bit including multiple bits as an example, the multiple bits in the fourth bit correspond to multiple terminals one by one. Alternatively, multiple bit groups in the fourth bit are in one-to-one correspondence with the multiple terminals.

The terminal determines, based on a user group or a preamble group of the random access preamble, a target bit among the multiple bits or a target bit group among the multiple bit groups. The target bit is a bit corresponding to the current terminal, and the target bit group is a bit (group) corresponding to the current terminal in the multiple bit groups. The correspondence between the random access preamble group and the target bit, the correspondence between the user group and the target bit, the correspondence between the random access preamble group and the target bit group, and the correspondence between the user group and the target bit group may be predefined by the communication protocol or preconfigured by the network device.

It should be noted that, when the terminal is a terminal that does not need coverage enhancement (that is, does not need repeated transmission of msg 3), the terminal interprets the scheduling information according to the scheduling information format of the initial version; and when the terminal is a terminal that needs coverage enhancement, the terminal interprets the scheduling information according to the scheduling information format of the first version or the second version.

Correspondingly, the network device sends the RAR or RAR scheduling information to the terminal, where the RAR or RAR indicates the repetition number of msg 3. For specific indication modes, reference may be made to the foregoing embodiments or various indication modes.

Since coverage enhancement is not required for every terminal, usually only some terminals at the cell edge need coverage enhancement. Therefore, the network device may need the terminal to perform some preparatory work before indicating the repetition number of msg 3.

FIG. 9 shows a flowchart of a method for sending msg 1 according to some embodiments of this application. The method includes following content.

In step 902, the terminal sends a msg 1 in the random access procedure, where the msg 1 is multiplexed to indicate at least one of the following information:
the terminal requires repeated transmission of msg 3;
a channel quality of the terminal;
a repetition number of msg 3 expected by the terminal.

The network device receives msg 1 in the random access procedure.

This step may be implemented in at least one of the following two modes.

In mode 7, a physical random access channel (PRACH) resource is used for indication.

The network device configures two types of PRACH resources for the terminal: PRACH resource(s) that does not need coverage enhancement, and PRACH resource(s) that needs coverage enhancement.

Assuming that the PRACH resource that needs coverage enhancement is the first random access channel resource(s), in the case that the current terminal is a terminal that needs coverage enhancement, the random access channel resource used by msg 1 is one of the first random access channel resource(s). In response to the random access channel resource used by msg 1 being one of the first random access channel resource(s), the network device determines that the terminal needs repeated transmission of msg 3.

In some embodiments, the first random access channel resource is the random access channel resource used when repeated transmission of msg 3 is required.

Optionally, the network device also configures PRACH resources corresponding to different channel qualities for the terminal in the first random access channel resource. When the channel quality of the terminal needs to be reported, the random access channel resource used by msg 1 is a resource, in the first random access channel resource, corresponding to the channel quality of the terminal. The network device determines the channel quality of the terminal according to the random access channel resource used by msg 1.

In some embodiments, different random access channel resources in the first random access channel resource correspond to different channel qualities, or there are at least two random access channel resources in the first random access channel resource that correspond to different channel qualities.

Optionally, the network device also configures, in the first random access channel resource, PRACH resources corresponding to different repetition numbers for the terminal. When the repetition number of msg 3 expected by the terminal needs to be reported, the random access channel resource used by msg 1 is a resource, in the first random access channel resource, corresponding to the repetition number of msg 3 expected by the terminal. The network device determines the repetition number of msg 3 expected by the terminal according to the random access channel resource used by the msg 1.

In some embodiments, different random access channel resources in the first random access channel resource correspond to different repetition numbers, or there are at least two random access channel resources in the first random access channel resource that correspond to different repetition numbers.

In mode 8, the random access preamble is used for indication.

The network device configures two types of random access preambles for the terminal: random access preamble(s) that does not need coverage enhancement, and random access preamble(s) that needs coverage enhancement.

Assuming that the random access preamble that needs coverage enhancement is the first random access preamble group, in the case that the current terminal is the terminal that needs coverage enhancement, the random access preamble used by msg 1 is one preamble in the first random access preamble group. In response to the random access preamble used by msg 1 being one preamble in the first random access preamble group, the network device determines that the terminal needs repeated transmission of msg 3.

In some embodiments, the first random access preamble group is a random access preamble used when repeated transmission of msg 3 is required.

Optionally, the network device also configures, in the first random access preamble group, random access preambles corresponding to different channel qualities for the terminal. When the channel quality of the terminal needs to be reported, the random access preamble used by msg 1 is one preamble, in the first random access preamble group, corresponding to the channel quality of the terminal. The network device determines the channel quality of the terminal according to the random access preamble used by msg 1.

In some embodiments, different random access preambles in the first random access preamble group correspond to different channel qualities, or at least two random access preambles in the first random access preamble group correspond to different channel qualities.

Optionally, the network device also configures, in the first random access preamble group, random access preambles corresponding to different repetition numbers for the terminal. When the repetition number of msg 3 expected by the terminal needs to be reported, the random access preamble used by msg 1 is one preamble, in the first random access preamble group, corresponding to the repetition number of msg 3 expected by the terminal. The network device determines the repetition number of msg 3 expected by the terminal according to the random access preamble used by msg 1.

In some embodiments, different random access preambles in the first random access preamble group correspond to different repetition numbers, or at least two random access preambles in the first random access preamble group correspond to different repetition numbers.

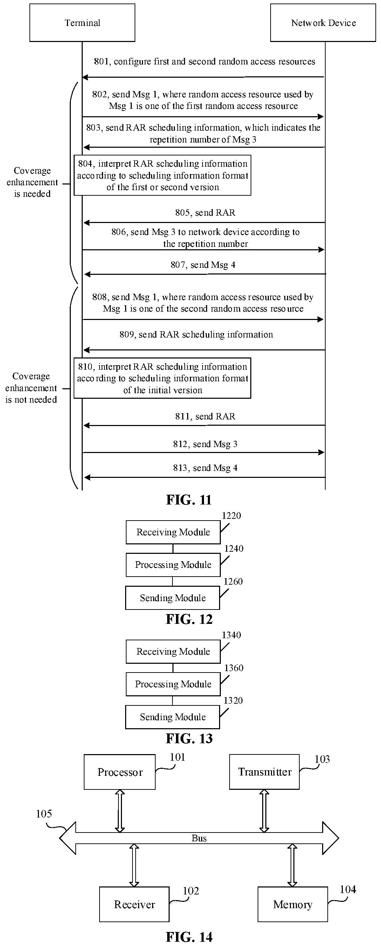

It should be noted that, the above embodiments may also be freely combined by those skilled in the art. Exemplary embodiments are shown in FIG. 10 and FIG. 11 below.

FIG. 10 shows a flowchart of an information indication method according to some embodiments of this application. The method includes following content.

In step 701, the network device configures a first random access resource and a second random access resource for terminals.

The first random access resource is a dedicated random access resource used by a terminal that needs coverage enhancement, and the second random access resource is a random access resource used by a common terminal that does not need coverage enhancement. The random access resources include: PRACH resources and/or random access preambles.

In some embodiments, the network device configures a first PRACH resource and a second PRACH resource for the terminals, the first PRACH resource is a dedicated PRACH resource used by the terminal that needs coverage enhancement, and the second PRACH resource is a PRACH resource used by the terminal that does not need coverage enhancement. Optionally, the network device further configures, in the first PRACH resource, PRACH resources corresponding to different channel qualities for the terminals. Optionally, the network device also configures, in the first PRACH resource, PRACH resources corresponding to different repetition numbers for the terminals.

In some other embodiments, the network device configures a first random access preamble group and a second random access preamble group for the terminals, where the first random access preamble group is a dedicated random access preamble group used by the terminal that needs coverage enhancement, and the second random access preamble group is a random access preamble group used by the terminal that does not need coverage enhancement. Optionally, the network device also configures, in the first random access preamble group, random access preambles corresponding to different channel qualities for the terminals. Optionally, the network device also configures, in the first random access preamble group, random access preambles corresponding to different repetition numbers for the terminals.

When coverage enhancement needs to be performed, the terminal and the network device perform steps 702 to 705.

In step 702, the terminal sends msg 1 to the network device, where the random access resource used by the msg 1 is one of the first random access resources.

Optionally, the random access resource used by the msg 1 is one of the first random access resources corresponding to the channel quality of the terminal and/or the repetition number expected by the terminal. The network device determines the channel quality of the terminal and/or the repetition number expected by the terminal based on the random access resource used by the msg 1.

Exemplarily, the first random access resource is at least one of a first PRACH resource and a first random access preamble group.

In step 703, the network device sends RAR to the terminal, where the RAR indicates the repetition number of msg 3.

In step 704, the terminal interprets the RARgrant format according to the first version or the second version, and sends msg 3 to the network device according to the repetition number.

In step 705, the network device sends msg 4 to the terminal.

In the case where coverage enhancement is not required, the terminal and the network device perform steps 706 to 709.

In step 706, the terminal sends msg 1 to the network device, where the random access resource used by the msg 1 is one of the second random access resources.

In step 707, the network device sends RAR to the terminal, where the RAR does not indicate the repetition number of msg 3.

In step 708, the terminal interprets the RARgrant format of the initial version, and sends msg 3 to the network device.

In step 709, the network device sends msg 4 to the terminal.

FIG. 11 shows a flowchart of an information indication method according to some embodiments of this application. The method includes following content.

In step 801, the network device configures a first random access resource and a second random access resource for terminals.

The first random access resource is a dedicated random access resource used by a terminal that needs coverage enhancement, and the second random access resource is a random access resource used by a common terminal that does not need coverage enhancement. The random access resources include: PRACH resources and/or random access preambles.

In some embodiments, the network device configures a first PRACH resource and a second PRACH resource for the terminals, where the first PRACH resource is a dedicated PRACH resource used by the terminal that needs coverage enhancement, and the second PRACH resource is a PRACH resource used by the terminal that does not need coverage enhancement. Optionally, the network device also configures, in the first PRACH resource, PRACH resources corresponding to different channel qualities for the terminals. Optionally, the network device also configures, in the first PRACH resource, PRACH resources corresponding to different repetition numbers for the terminals.

In some other embodiments, the network device configures a first random access preamble group and a second random access preamble group for the terminals, where the first random access preamble group is a dedicated random access preamble group used by the terminal that needs coverage enhancement, and the second random access preamble group is a random access preamble group used by the terminal that does not need coverage enhancement. Optionally, the network device also configures, in the first random access preamble group, random access preambles corresponding to different channel qualities for the terminals. Optionally, the network device also configures, in the first random access preamble group, random access preambles corresponding to different repetition numbers for the terminals.

When coverage enhancement is required, the terminal and the network device perform steps 802 to 807.

In step 802, the terminal sends msg 1 to the network device, where the random access channel resource used by the msg 1 is one of the first random access channel resource.

Optionally, the random access resource used by the msg 1 is one of the first random access resource corresponding to the channel quality of the terminal and/or the repetition number expected by the terminal. The network device determines the channel quality of the terminal and/or the repetition number expected by the terminal based on the random access resource used by the msg 1.

Exemplarily, the first random access resource is at least one of a first PRACH resource and a first random access preamble group.

In step 803, the network device sends the RAR scheduling information to the terminal, where the RAR scheduling information indicates the repetition number of msg 3.

In step 804, the terminal interprets the scheduling information of the RAR according to the scheduling information format of the first version or the second version.

In step 805, the network device sends an RAR to the terminal, where the RAR indicates the repetition number of msg 3.

In step 806, the terminal sends msg 3 to the network device according to the repetition number.

In step 807, the network device sends msg 4 to the terminal.

In the case where coverage enhancement is not required, the terminal and the network device perform steps 808 to 813.

In step 808, the terminal sends msg 1 to the network device, where the random access channel resource used by the msg 1 is one of the second random access channel resource.

In step 809, the network device sends the RAR scheduling information to the terminal.

In step 810, the terminal interprets the scheduling information of the RAR according to the scheduling information format of the initial version.

In step 811, the network device sends the RAR to the terminal.

In step 812, the terminal sends msg 3 to the network device.

In step 813, the network device sends msg 4 to the terminal.

FIG. 12 shows a block diagram of an information indicating apparatus according to some embodiments of this application, and the apparatus includes following content.

A receiving module 1220 is configured to receive a random access response or scheduling information of the random access response, where a repetition number of msg 3 is indicated in the random access response or the scheduling information of the random access response.

In some embodiments, the random access response includes: a first bit field; and the first bit field is used for indicating the repetition number of msg 3.

In some embodiments, the first bit field includes: a RARgrant field.

In some embodiments, a CSIrequest field in the RARgrant field is multiplexed to indicate the repetition number of msg 3.

In some embodiments, the CSIrequest field is a first value, and is multiplexed to indicate the repetition number of msg 3 as a first repetition number; or the CSIrequest field is a second value, and is multiplexed to indicate the repetition number of msg 3 as a second repetition number.

In some embodiments, a PUSCH frequency resource allocation field in the RARgrant field includes partial bits being multiplexed to indicate the repetition number of msg 3.

In some embodiments, the partial bits are 2 bits; four different values of the 2 bits are multiplexed to indicate four repetition numbers of msg 3; and the four different values are the same as the four repetition numbers, respectively; or the four different values are in a correspondence with the four repetition numbers.

In some embodiments, remaining bits, other than the partial bits, in the PUSCH frequency resource allocation field are used for indicating n PRBs; and a CSIrequest field in the RARgrant field is a first value, and is multiplexed to indicate that the n PRBs are located in a first position of a ULBWP; or the CSIrequest field is a second value, and is multiplexed to indicate that the n PRBs are located in a second position of the ULBWP.

In some embodiments, a first bit and a second bit in the RARgrant field are multiplexed to indicate the repetition number of msg 3; the first bit includes partial bits in a PUSCH frequency resource allocation field of the RARgrant field, and the second bit includes a bit in a CSIrequest field of the RARgrant field.

In some embodiments, the first bit is a high-order bit, and the second bit is a low-order bit; or the first bit is a low-order bit, and the second bit is a high-order bit.

In some embodiments, the scheduling information of the random access response includes: a second bit field; and the second bit field is multiplexed to indicate the repetition number of msg 3.

In some embodiments, the scheduling information includes a DCI adopting the DCI format 1-0, and the second bit field includes: multiple bits or multiple bit groups in reserved bits of the DCI, and the multiple bits or the multiple bit groups are in one-to-one correspondence with multiple terminals.

In some embodiments, a first bit in the RARgrant field is used for indicating the repetition number of msg 3; and a number of bits in the RARgrant field is 27 bits. Optionally, there is no CSIrequest field in the RARgrant field.

In some embodiments, the first bit is a first value, and is used for indicating the repetition number of msg 3 as a first repetition number; or the first bit is a second value, and is used for indicating the repetition number of msg 3 as a second repetition number.

In some embodiments, a second bit in the RARgrant field is used for indicating the repetition number of msg 3; and a number of bits in the RARgrant field is 27 bits. Optionally, a sum of bits of a PUSCH frequency resource allocation field and the second bit in the RARgrant field is less than or equal to 14.

In some embodiments, the second bit includes 2 bits; four different values of the 2 bits are multiplexed to indicate four repetition numbers of msg 3; and the four different values are the same as the four repetition numbers, respectively; or the four different values are in a correspondence with the four repetition numbers.

In some embodiments, the PUSCH frequency resource allocation field is used for indicating n PRBs. A third bit in the RARgrant field is a first value, and is multiplexed to indicate that the n PRBs are located in a first position of a ULBWP; or the third bit is a second value, and is multiplexed to indicate that the n PRBs are located in a second position of the ULBWP.

In some embodiments, a first bit and a second bit in the RARgrant field are used for indicating the repetition number of msg 3; and a number of bits in the RARgrant field is 27. Optionally, there is no CSIrequest field in the RARgrant field, and a sum of bits of a PUSCH frequency resource allocation field and the second bit in the RARgrant field is less than or equal to 14.

In some embodiments, the first bit is a high-order bit, and the second bit is a low-order bit; or, the first bit is a low-order bit, and the second bit is a high-order bit.

In some embodiments, the scheduling information includes a DCI adopting the DCI format 1-0, and the second bit field includes: multiple bits or multiple bit groups in a fourth bit of the DCI, and the multiple bits or the multiple bit groups are in one-to-one correspondence with multiple terminals; where a sum of bits of the fourth bit and reserved bits in the DCI is less than or equal to 16 bits.

In some embodiments, the apparatus further includes a processing module 1240, configured to determine, based on a user group or a preamble group of a random access preamble, a target bit in the multiple bits or a target bit group in the multiple bit groups.

In some embodiments, the apparatus further includes a sending module 1260, configured to send msg 1 in a random access procedure, where the msg 1 is multiplexed to indicate at least one of following information:
the apparatus requires repeated transmission of the msg 3;
a channel quality of the apparatus;
a repetition number of msg 3 expected by the apparatus.

In some embodiments, a random access channel resource used by the msg 1 is a resource in a first random access channel resource; and the first random access channel resource is a random access channel resource used when the repeated transmission of the msg 3 is required.

In some embodiments, the random access channel resource used by the msg 1 is a resource, in the first random access channel resource, corresponding to the channel quality of the apparatus. Different random access channel resources in the first random access channel resource correspond to different channel qualities; or at least two random access channel resources in the first random access channel resource correspond to different channel qualities.

In some embodiments, the random access channel resource used by the msg 1 is a resource, in the first random access channel resource, corresponding to the repetition number of msg 3 expected by the apparatus. Different random access channel resources in the first random access channel resource correspond to different repetition numbers; or at least two random access channel resources in the first random access channel resource correspond to different repetition numbers.

In some embodiments, a random access preamble used by the msg 1 is a preamble in a first random access preamble group; and the first random access preamble group is a random access preamble group used when the repeated transmission of the msg 3 is required.

In some embodiments, the random access preamble used by the msg 1 is a preamble, in the first random access preamble group, corresponding to the channel quality of the apparatus. Different random access preambles in the first random access preamble group correspond to different channel qualities; or at least two random access preambles in the first random access preamble group correspond to different channel qualities.

In some embodiments, the random access preamble used by the msg 1 is a preamble, in the first random access preamble group, corresponding to the repetition number of msg 3 expected by the apparatus. Different random access preambles in the first random access preamble group correspond to different repetition numbers; or at least two random access preambles in the first random access preamble group correspond to different repetition numbers.

FIG. 13 shows a block diagram of an information indicating apparatus according to some embodiments of this application, and the apparatus includes following content.

A sending module 1320 is configured to send a random access response or scheduling information of the random access response, where a repetition number of msg 3 is indicated in the random access response or the scheduling information of the random access response.

In some embodiments, the random access response includes: a first bit field; and the first bit field is used for indicating the repetition number of msg 3.

In some embodiments, the first bit field includes: a RARgrant field.

In some embodiments, a CSIrequest field in the RARgrant field is multiplexed to indicate the repetition number of msg 3.

In some embodiments, the CSIrequest field is a first value, and is multiplexed to indicate the repetition number of msg 3 as a first repetition number; or the CSIrequest field is a second value, and is multiplexed to indicate the repetition number of msg 3 as a second repetition number.

In some embodiments, a PUSCH frequency resource allocation field in the RARgrant field includes partial bits being multiplexed to indicate the repetition number of msg 3.

In some embodiments, the partial bits are 2 bits; four different values of the 2 bits are multiplexed to indicate four repetition numbers of msg 3. The four different values are the same as the four repetition numbers, respectively; or the four different values are in a correspondence with the four repetition numbers.

In some embodiments, remaining bits, other than the partial bits, in the PUSCH frequency resource allocation field are used for indicating n PRBs. A CSIrequest field in the RARgrant field is a first value, and is multiplexed to indicate that the n PRBs are located in a first position of a ULBWP; or the CSIrequest field is a second value, and is multiplexed to indicate that the n PRBs are located in a second position of the ULBWP.

In some embodiments, a first bit and a second bit in the RARgrant field are multiplexed to indicate the repetition number of msg 3; the first bit includes partial bits in a PUSCH frequency resource allocation field of the RARgrant field, and the second bit includes a bit in a CSIrequest field of the RARgrant field.

In some embodiments, the first bit is a high-order bit, and the second bit is a low-order bit; or, the first bit is a low-order bit, and the second bit is a high-order bit.

In some embodiments, the scheduling information of the random access response includes: a second bit field; and the second bit field is multiplexed to indicate the repetition number of msg 3.

In some embodiments, the scheduling information includes a DCI adopting the DCI format 0-1, and the second bit field includes: multiple bits or multiple bit groups in reserved bits of the DCI, and the multiple bits or the multiple bit groups are in one-to-one correspondence with multiple terminals.

In some embodiments, a first bit in the RARgrant field is used for indicating the repetition number of msg 3; and a number of bits in the RARgrant field is 27 bits. Optionally, there is no CSIrequest field in the RARgrant field.

In some embodiments, the first bit is a first value, and is used for indicating the repetition number of msg 3 as a first repetition number; or the first bit is a second value, and is used for indicating the repetition number of msg 3 as a second repetition number.

In some embodiments, a second bit in the RARgrant field is used for indicating the repetition number of msg 3; and a number of bits in the RARgrant field is 27 bits. Optionally, a sum of bits of a PUSCH frequency resource allocation field and the second bit in the RARgrant field is less than or equal to 14.

In some embodiments, the second bit includes 2 bits; four different values of the 2 bits are multiplexed to indicate four repetition numbers of msg 3. The four different values are the same as the four repetition numbers, respectively; or the four different values are in a correspondence with the four repetition numbers.

In some embodiments, the PUSCH frequency resource allocation field is used for indicating n PRBs. A third bit in the RARgrant field is a first value, and is multiplexed to indicate that the n PRBs are located in a first position of a ULBWP; or the third bit is a second value, and is multiplexed to indicate that the n PRBs are located in a second position of the ULBWP.

In some embodiments, a first bit and a second bit in the RARgrant field are used for indicating the repetition number of msg 3; and a number of bits in the RARgrant field is 27. Optionally, there is no CSIrequest field in the RARgrant field, and a sum of bits of a PUSCH frequency resource allocation field and the second bit in the RARgrant field is less than or equal to 14.

In some embodiments, the first bit is a high-order bit, and the second bit is a low-order bit; or, the first bit is a low-order bit, and the second bit is a high-order bit.

In some embodiments, the scheduling information includes a DCI adopting the DCI format 1-0, and the second bit field includes: multiple bits or multiple bit groups in a fourth bit of the DCI, and the multiple bits or the multiple bit groups are in one-to-one correspondence with multiple terminals; where a sum of bits of the fourth bit and reserved bits in the DCI is less than or equal to 16 bits.

In some embodiments, the apparatus further includes a sending module 1320, configured to configure a random access preamble group or a user group to a terminal, thereby enabling the terminal to determine a target bit in the multiple bits or a target bit group in the multiple bit groups.

In some embodiments, the apparatus further includes a receiving module 1340, configured to receive msg 1 in a random access procedure, where the msg 1 is multiplexed to indicate at least one of following information:
a terminal requires repeated transmission of the msg 3;
a channel quality of the terminal;
a repetition number of msg 3 expected by the terminal.

In some embodiments, the apparatus further includes a processing module 1360, configured to determine, in response to a random access channel resource used by the msg 1 being a resource in a first random access channel resource, that the terminal requires repeated transmission of the msg 3.

In some embodiments, the apparatus further includes a processing module 1360, configured to determine the channel quality of the terminal according to the random access channel resource used by the msg 1. Different random access channel resources in the first random access channel resource correspond to different channel qualities; or at least two random access channel resources in the first random access channel resource correspond to different channel qualities.

In some embodiments, the apparatus further includes a processing module 1360, configured to determine the repetition number of msg 3 expected by the terminal according to the random access channel resource used by the msg 1. Different random access channel resources in the first random access channel resource correspond to different repetition numbers; or at least two random access channel resources in the first random access channel resource correspond to different repetition numbers.

In some embodiments, the apparatus further includes a processing module 1360, configured to determine, in response to a random access preamble used by the msg 1 being a preamble in a first random access preamble group, that the terminal requires repeated transmission of the msg 3.

In some embodiments, the apparatus further includes a processing module 1360, configured to determine the channel quality of the terminal according to the random access preamble used by the msg 1. Different random access preambles in the first random access preamble group correspond to different channel qualities; or at least two random access preambles in the first random access preamble group correspond to different channel qualities.

In some embodiments, the apparatus further includes a processing module 1360, configured to determine the repetition number of msg 3 expected by the terminal according to the random access preamble used by the msg 1. Different random access preambles in the first random access preamble group correspond to different repetition numbers; or at least two random access preambles in the first random access preamble group correspond to different repetition numbers.

FIG. 14 shows a schematic structural diagram of a communication device (terminal or network device) according to some embodiments of this application. The communication device includes: a processor 101, a receiver 102, a transmitter 103, a memory 104 and a bus 105.

The processor 101 includes one or more processing cores, and the processor 101 executes various functional applications and information processing by running software programs and modules.

The receiver 102 and the transmitter 103 may be implemented as a single communication component, which may be a communication chip.

The memory 104 is connected to the processor 101 through the bus 105.

The memory 104 may be configured to store at least one instruction, and the processor 101 is configured to execute the at least one instruction, so as to implement each step of the information indication method mentioned in the above method embodiments.

The operations performed by the sending module in FIG. 12 or FIG. 13 may be performed by the transmitter 103 in some embodiments; the operations performed by the receiving module in FIG. 12 or FIG. 13 may be performed by the receiver 104 in some embodiments. The operations performed by modules except for the sending module and the receiving module in FIG. 12 or FIG. 13 may be performed by the processor 101 in some embodiments.

Additionally, the memory 104 may be implemented by any type or combination of volatile or non-volatile storage devices including, but not limited to, magnetic or optical disks, Electrically-Erasable Programmable Read Only Memory (EEPROM), Erasable Programmable Read Only Memory (EPROM), Static Random Access Memory (SRAM), Read Only Memory (ROM), magnetic memory, flash memory, and Programmable Read-Only Memory (PROM).

In some embodiments, a computer-readable storage medium is further provided, where the computer-readable storage medium stores at least one instruction, or at least one piece of program, code set or instruction set, where the at least one instruction, or the at least one piece of program, code set or instruction set is loaded and executed by a processor to implement the information indicating method executed by the communication device according to the above method embodiments.

In some embodiments, there is also provided a computer program product or computer program including computer instructions stored in a computer readable storage medium, from which a processor of a communication device reads the computer instructions, and executes the computer instructions, so that the communication device implement the information indicating method described in the above aspects.

Those of ordinary skill in the art can understand that all or part of the steps of implementing the above embodiments may be completed by hardware, or may be completed by instructing relevant hardware through a program, where the program may be stored in a computer-readable storage medium. The storage medium as described may be a read-only memory, a magnetic disk, an optical disk, or the like.

The above descriptions are only optional embodiments of this application, and are not intended to limit this application. Any modifications, equivalent replacements, improvements, and the like made within the spirit and principles of this application shall fall within the protection scope of this application.

## Claims

1. An information indication method, **characterized in** being applied to a terminal and comprising:
receiving a random access response or scheduling information of the random access response, wherein a repetition number of message (msg) 3 is indicated in the random access response or the scheduling information of the random access response.

2. The method according to claim 1, wherein the random access response comprises: a first bit field; and
the first bit field is used for indicating the repetition number of msg 3.

3. The method according to claim 2, wherein the first bit field comprises: a random access response scheduling grant (RARgrant) field.

4. The method according to claim 3, wherein,
a channel state information request (CSIrequest) field in the RARgrant field is multiplexed to indicate the repetition number of msg 3.

5. The method according to claim 4, wherein,
the CSIrequest field is a first value, and is multiplexed to indicate the repetition number of msg 3 as a first repetition number; or
the CSIrequest field is a second value, and is multiplexed to indicate the repetition number of msg 3 as a second repetition number.

6. The method according to claim 3, wherein,
a physical uplink shared channel (PUSCH) frequency resource allocation field in the RARgrant field comprises partial bits being multiplexed to indicate the repetition number of msg 3.

7. The method according to claim 6, wherein the partial bits are 2 bits;
four different values of the 2 bits are multiplexed to indicate four repetition numbers of msg 3; and
the four different values are the same as the four repetition numbers, respectively; or the four different values are in a correspondence with the four repetition numbers.

8. The method according to claim 6, wherein,
remaining bits, other than the partial bits, in the PUSCH frequency resource allocation field are used for indicating n PRBs; and
a channel state information request (CSIrequest) field in the RARgrant field is a first value, and is multiplexed to indicate that the n PRBs are located in a first position of an uplink bandwidth part (ULBWP); or the CSIrequest field is a second value, and is multiplexed to indicate that the n PRBs are located in a second position of the ULBWP.

9. The method according to claim 3, wherein,
a first bit and a second bit in the RARgrant field are multiplexed to indicate the repetition number of msg 3;
the first bit comprises partial bits in a physical uplink shared channel (PUSCH) frequency resource allocation field of the RARgrant field, and the second bit comprises a bit in a channel state information request (CSIrequest) field of the RARgrant field.

10. The method according to claim 9, wherein the first bit is a high-order bit, and the second bit is a low-order bit; or
the first bit is a low-order bit, and the second bit is a high-order bit.

11. The method according to claim 1, wherein the scheduling information of the random access response comprises: a second bit field; and
the second bit field is multiplexed to indicate the repetition number of msg 3.

12. The method according to claim 11, wherein the scheduling information comprises adopting a downlink control information (DCI), and the second bit field comprises:
multiple bits or multiple bit groups in reserved bits of the DCI, and the multiple bits or the multiple bit groups are in one-to-one correspondence with multiple terminals.

13. The method according to claim 3, wherein,
a first bit in the RARgrant field is used for indicating the repetition number of msg 3; and a number of bits in the RARgrant field is 27 bits.

14. The method according to claim 13, wherein,
the first bit is a first value, and is used for indicating the repetition number of msg 3 as a first repetition number; or
the first bit is a second value, and is used for indicating the repetition number of msg 3 as a second repetition number.

15. The method according to claim 3, wherein,
a second bit in the RARgrant field is used for indicating the repetition number of msg 3; and
a sum of bits of a physical uplink shared channel (PUSCH) frequency resource allocation field and the second bit in the RARgrant field is less than or equal to 14.

16. The method according to claim 15, wherein the second bit comprises 2 bits;
four different values of the 2 bits are multiplexed to indicate four repetition numbers of msg 3; and
the four different values are the same as the four repetition numbers, respectively; or the four different values are in a correspondence with the four repetition numbers.

17. The method according to claim 15, wherein the PUSCH frequency resource allocation field is used for indicating n PRBs; and
a third bit in the RARgrant field is a first value, and is multiplexed to indicate that the n PRBs are located in a first position of an uplink bandwidth part (ULBWP); or the third bit is a second value, and is multiplexed to indicate that the n PRBs are located in a second position of the ULBWP.

18. The method according to claim 3, wherein,
a first bit and a second bit in the RARgrant field are used for indicating the repetition number of msg 3;
a number of bits in the RARgrant field is 27, and a sum of bits of a physical uplink shared channel (PUSCH) frequency resource allocation field and the second bit in the RARgrant field is less than or equal to 14.

19. The method according to claim 18, wherein the first bit is a high-order bit, and the second bit is a low-order bit; or, the first bit is a low-order bit, and the second bit is a high-order bit.

20. The method according to claim 11, wherein the scheduling information comprises adopting a downlink control information (DCI), and the second bit field comprises:
multiple bits or multiple bit groups in a fourth bit of the DCI, and the multiple bits or the multiple bit groups are in one-to-one correspondence with multiple terminals; wherein a sum of bits of the fourth bit and reserved bits in the DCI is less than or equal to 16 bits.

21. The method according to claim 12 or 20, further comprising:
determining, based on a user group or a preamble group of a random access preamble, a target bit in the multiple bits or a target bit group in the multiple bit groups.

22. The method according to any one of claims 1 to 21, further comprising:
sending msg 1 in a random access procedure, wherein the msg 1 is multiplexed to indicate at least one of following information:
the terminal requires repeated transmission of the msg 3;
a channel quality of the terminal;
a repetition number of msg 3 expected by the terminal.

23. The method according to claim 22, wherein,
a random access channel resource used by the msg 1 is a resource in a first random access channel resource; and
the first random access channel resource is a random access channel resource used when the repeated transmission of the msg 3 is required.

24. The method according to claim 23, wherein,
the random access channel resource used by the msg 1 is a resource, in the first random access channel resource, corresponding to the channel quality of the terminal; and
different random access channel resources in the first random access channel resource correspond to different channel qualities; or at least two random access channel resources in the first random access channel resource correspond to different channel qualities.

25. The method according to claim 23, wherein,
the random access channel resource used by the msg 1 is a resource, in the first random access channel resource, corresponding to the repetition number of msg 3 expected by the terminal; and
different random access channel resources in the first random access channel resource correspond to different repetition numbers; or at least two random access channel resources in the first random access channel resource correspond to different repetition numbers.

26. The method according to claim 22, wherein,
a random access preamble used by the msg 1 is a preamble in a first random access preamble group; and
the first random access preamble group is a random access preamble group used when the repeated transmission of the msg 3 is required.

27. The method according to claim 26, wherein,
the random access preamble used by the msg 1 is a preamble, in the first random access preamble group, corresponding to the channel quality of the terminal; and
different random access preambles in the first random access preamble group correspond to different channel qualities; or at least two random access preambles in the first random access preamble group correspond to different channel qualities.

28. The method according to claim 26, wherein,
the random access preamble used by the msg 1 is a preamble, in the first random access preamble group, corresponding to the repetition number of msg 3 expected by the terminal; and
different random access preambles in the first random access preamble group correspond to different repetition numbers; or at least two random access preambles in the first random access preamble group correspond to different repetition numbers.

29. An information indication method, **characterized in** being applied to a network device and comprising:
sending a random access response or scheduling information of the random access response, wherein a repetition number of message (msg) 3 is indicated in the random access response or the scheduling information of the random access response.

30. The method according to claim 29, wherein the random access response comprises: a first bit field; and
the first bit field is used for indicating the repetition number of msg 3.

31. The method according to claim 30, wherein the first bit field comprises: a random access response scheduling grant (RARgrant) field.

32. The method according to claim 31, wherein,
a channel state information request (CSIrequest) field in the RARgrant field is multiplexed to indicate the repetition number of msg 3.

33. The method according to claim 32, wherein,
the CSIrequest field is a first value, and is multiplexed to indicate the repetition number of msg 3 as a first repetition number; or
the CSIrequest field is a second value, and is multiplexed to indicate the repetition number of msg 3 as a second repetition number.

34. The method according to claim 31, wherein,
a physical uplink shared channel (PUSCH) frequency resource allocation field in the RARgrant field comprises partial bits being multiplexed to indicate the repetition number of msg 3.

35. The method according to claim 34, wherein the partial bits are 2 bits;
four different values of the 2 bits are multiplexed to indicate four repetition numbers of msg 3; and
the four different values are the same as the four repetition numbers, respectively; or the four different values are in a correspondence with the four repetition numbers.

36. The method according to claim 34, wherein,
remaining bits, other than the partial bits, in the PUSCH frequency resource allocation field are used for indicating n PRBs; and
a channel state information request (CSIrequest) field in the RARgrant field is a first value, and is multiplexed to indicate that the n PRBs are located in a first position of an uplink bandwidth part (ULBWP); or the CSIrequest field is a second value, and is multiplexed to indicate that the n PRBs are located in a second position of the ULBWP.

37. The method according to claim 31, wherein,
a first bit and a second bit in the RARgrant field are multiplexed to indicate the repetition number of msg 3;
the first bit comprises partial bits in a physical uplink shared channel (PUSCH) frequency resource allocation field of the RARgrant field, and the second bit comprises a bit in a channel state information request (CSIrequest) field of the RARgrant field.

38. The method according to claim 37, wherein the first bit is a high-order bit, and the second bit is a low-order bit; or, the first bit is a low-order bit, and the second bit is a high-order bit.

39. The method according to claim 29, wherein the scheduling information of the random access response comprises: a second bit field; and
the second bit field is multiplexed to indicate the repetition number of msg 3.

40. The method according to claim 39, wherein the scheduling information comprises a downlink control information (DCI) using DCI format 1-0, and the second bit field comprises:
multiple bits or multiple bit groups in reserved bits of the DCI, and the multiple bits or the multiple bit groups are in one-to-one correspondence with multiple terminals.

41. The method according to claim 31, wherein,
a first bit in the RARgrant field is used for indicating the repetition number of msg 3; and a number of bits in the RARgrant field is 27 bits.

42. The method according to claim 41, wherein,
the first bit is a first value, and is used for indicating the repetition number of msg 3 as a first repetition number; or
the first bit is a second value, and is used for indicating the repetition number of msg 3 as a second repetition number.

43. The method according to claim 31, wherein,
a second bit in the RARgrant field is used for indicating the repetition number of msg 3; and
a sum of bits of a physical uplink shared channel (PUSCH) frequency resource allocation field and the second bit in the RARgrant field is less than or equal to 14.

44. The method according to claim 43, wherein the second bit comprises 2 bits;
four different values of the 2 bits are multiplexed to indicate four repetition numbers of msg 3; and
the four different values are the same as the four repetition numbers, respectively; or the four different values are in a correspondence with the four repetition numbers.

45. The method according to claim 43, wherein the PUSCH frequency resource allocation field is used for indicating n PRBs; and
a third bit in the RARgrant field is a first value, and is multiplexed to indicate that the n PRBs are located in a first position of an uplink bandwidth part (ULBWP); or the third bit is a second value, and is multiplexed to indicate that the n PRBs are located in a second position of the ULBWP.

46. The method according to claim 31, wherein,
a first bit and a second bit in the RARgrant field are used for indicating the repetition number of msg 3;
a number of bits in the RARgrant field is 27, and a sum of bits of a physical uplink shared channel (PUSCH) frequency resource allocation field and the second bit in the RARgrant field is less than or equal to 14.

47. The method according to claim 46, wherein the first bit is a high-order bit, and the second bit is a low-order bit; or, the first bit is a low-order bit, and the second bit is a high-order bit.

48. The method according to claim 39, wherein the scheduling information comprises a downlink control information (DCI) using DCI format 1-0, and the second bit field comprises:
multiple bits or multiple bit groups in a fourth bit of the DCI, and the multiple bits or the multiple bit groups are in one-to-one correspondence with multiple terminals; wherein a sum of bits of the fourth bit and reserved bits in the DCI is less than or equal to 16 bits.

49. The method according to claim 40 or 48, further comprising:
configuring a random access preamble group or a user group to a terminal, thereby enabling the terminal to determine a target bit in the multiple bits or a target bit group in the multiple bit groups.

50. The method according to any one of claims 29 to 49, further comprising:
receiving msg 1 in a random access procedure, wherein the msg 1 is multiplexed to indicate at least one of following information:
a terminal requires repeated transmission of the msg 3;
a channel quality of the terminal;
a repetition number of msg 3 expected by the terminal.

51. The method according to claim 50, further comprising:
determining, in response to a random access channel resource used by the msg 1 being a resource in a first random access channel resource, that the terminal requires repeated transmission of the msg 3.

52. The method according to claim 51, further comprising:
determining the channel quality of the terminal according to the random access channel resource used by the msg 1;
wherein different random access channel resources in the first random access channel resource correspond to different channel qualities; or at least two random access channel resources in the first random access channel resource correspond to different channel qualities.

53. The method according to claim 51, further comprising:
determining the repetition number of msg 3 expected by the terminal according to the random access channel resource used by the msg 1;
wherein different random access channel resources in the first random access channel resource correspond to different repetition numbers; or at least two random access channel resources in the first random access channel resource correspond to different repetition numbers.

54. The method according to claim 50, further comprising:
determining, in response to a random access preamble used by the msg 1 being a preamble in a first random access preamble group, that the terminal requires repeated transmission of the msg 3.

55. The method according to claim 54, further comprising:
determining the channel quality of the terminal according to the random access preamble used by the msg 1;
wherein different random access preambles in the first random access preamble group correspond to different channel qualities; or at least two random access preambles in the first random access preamble group correspond to different channel qualities.

56. The method according to claim 54, further comprising:
determining the repetition number of msg 3 expected by the terminal according to the random access preamble used by the msg 1;
wherein different random access preambles in the first random access preamble group correspond to different repetition numbers; or at least two random access preambles in the first random access preamble group correspond to different repetition numbers.

57. An information indication apparatus, **characterized in** comprising:
a receiving module, configured to receive a random access response or scheduling information of the random access response, wherein a repetition number of message (msg) 3 is indicated in the random access response or the scheduling information of the random access response.

58. The apparatus according to claim 57, wherein the random access response comprises: a first bit field; and
the first bit field is used for indicating the repetition number of msg 3.

59. The apparatus according to claim 58, wherein the first bit field comprises: a random access response scheduling grant (RARgrant) field.

60. The apparatus according to claim 59, wherein,
a channel state information request (CSIrequest) field in the RARgrant field is multiplexed to indicate the repetition number of msg 3.

61. The apparatus according to claim 60, wherein,
the CSIrequest field is a first value, and is multiplexed to indicate the repetition number of msg 3 as a first repetition number; or
the CSIrequest field is a second value, and is multiplexed to indicate the repetition number of msg 3 as a second repetition number.

62. The apparatus according to claim 59, wherein,
a physical uplink shared channel (PUSCH) frequency resource allocation field in the RARgrant field comprises partial bits being multiplexed to indicate the repetition number of msg 3.

63. The apparatus according to claim 62, wherein the partial bits are 2 bits;
four different values of the 2 bits are multiplexed to indicate four repetition numbers of msg 3; and
the four different values are the same as the four repetition numbers, respectively; or the four different values are in a correspondence with the four repetition numbers.

64. The apparatus according to claim 62, wherein,
remaining bits, other than the partial bits, in the PUSCH frequency resource allocation field are used for indicating n PRBs; and
a channel state information request (CSIrequest) field in the RARgrant field is a first value, and is multiplexed to indicate that the n PRBs are located in a first position of an uplink bandwidth part (ULBWP); or the CSIrequest field is a second value, and is multiplexed to indicate that the n PRBs are located in a second position of the ULBWP.

65. The apparatus according to claim 59, wherein,
a first bit and a second bit in the RARgrant field are multiplexed to indicate the repetition number of msg 3;
the first bit comprises partial bits in a physical uplink shared channel (PUSCH) frequency resource allocation field of the RARgrant field, and the second bit comprises a bit in a channel state information request (CSIrequest) field of the RARgrant field.

66. The apparatus according to claim 65, wherein the first bit is a high-order bit, and the second bit is a low-order bit; or the first bit is a low-order bit, and the second bit is a high-order bit.

67. The apparatus according to claim 57, wherein the scheduling information of the random access response comprises: a second bit field; and
the second bit field is multiplexed to indicate the repetition number of msg 3.

68. The apparatus according to claim 67, wherein the scheduling information comprises adopting a downlink control information (DCI), and the second bit field comprises:
multiple bits or multiple bit groups in reserved bits of the DCI, and the multiple bits or the multiple bit groups are in one-to-one correspondence with multiple terminals.

69. The apparatus according to claim 59, wherein,
a first bit in the RARgrant field is used for indicating the repetition number of msg 3; and
a number of bits in the RARgrant field is 27 bits.

70. The apparatus according to claim 69, wherein,
the first bit is a first value, and is used for indicating the repetition number of msg 3 as a first repetition number; or
the first bit is a second value, and is used for indicating the repetition number of msg 3 as a second repetition number.

71. The apparatus according to claim 59, wherein,
a second bit in the RARgrant field is used for indicating the repetition number of msg 3; and
a sum of bits of a physical uplink shared channel (PUSCH) frequency resource allocation field and the second bit in the RARgrant field is less than or equal to 14.

72. The apparatus according to claim 71, wherein the second bit comprises 2 bits;
four different values of the 2 bits are multiplexed to indicate four repetition numbers of msg 3; and
the four different values are the same as the four repetition numbers, respectively; or the four different values are in a correspondence with the four repetition numbers.

73. The apparatus according to claim 71, wherein the PUSCH frequency resource allocation field is used for indicating n PRBs; and
a third bit in the RARgrant field is a first value, and is multiplexed to indicate that the n PRBs are located in a first position of an uplink bandwidth part (ULBWP); or the third bit is a second value, and is multiplexed to indicate that the n PRBs are located in a second position of the ULBWP.

74. The apparatus according to claim 59, wherein,
a first bit and a second bit in the RARgrant field are used for indicating the repetition number of msg 3;
a number of bits in the RARgrant field is 27, and a sum of bits of a physical uplink shared channel (PUSCH) frequency resource allocation field and the second bit in the RARgrant field is less than or equal to 14.

75. The apparatus according to claim 74, wherein the first bit is a high-order bit, and the second bit is a low-order bit; or, the first bit is a low-order bit, and the second bit is a high-order bit.

76. The apparatus according to claim 67, wherein the scheduling information comprises adopting a downlink control information (DCI), and the second bit field comprises:
multiple bits or multiple bit groups in a fourth bit of the DCI, and the multiple bits or the multiple bit groups are in one-to-one correspondence with multiple terminals; wherein a sum of bits of the fourth bit and reserved bits in the DCI is less than or equal to 16 bits.

77. The apparatus according to claim 68 or 76, further comprising:
a processing module, configured to determine, based on a user group or a preamble group of a random access preamble, a target bit in the multiple bits or a target bit group in the multiple bit groups.

78. The apparatus according to any one of claims 57 to 77, further comprising:
a sending module, configured to send msg 1 in a random access procedure, wherein the msg 1 is multiplexed to indicate at least one of following information:
the apparatus requires repeated transmission of the msg 3;
a channel quality of the apparatus;
a repetition number of msg 3 expected by the apparatus.

79. The apparatus according to claim 78, wherein,
a random access channel resource used by the msg 1 is a resource in a first random access channel resource; and
the first random access channel resource is a random access channel resource used when the repeated transmission of the msg 3 is required.

80. The apparatus according to claim 79, wherein,
the random access channel resource used by the msg 1 is a resource, in the first random access channel resource, corresponding to the channel quality of the apparatus; and
different random access channel resources in the first random access channel resource correspond to different channel qualities; or at least two random access channel resources in the first random access channel resource correspond to different channel qualities.

81. The apparatus according to claim 79, wherein,
the random access channel resource used by the msg 1 is a resource, in the first random access channel resource, corresponding to the repetition number of msg 3 expected by the apparatus; and
different random access channel resources in the first random access channel resource correspond to different repetition numbers; or at least two random access channel resources in the first random access channel resource correspond to different repetition numbers.

82. The apparatus according to claim 78, wherein,
a random access preamble used by the msg 1 is a preamble in a first random access preamble group; and
the first random access preamble group is a random access preamble group used when the repeated transmission of the msg 3 is required.

83. The apparatus according to claim 82, wherein,
the random access preamble used by the msg 1 is a preamble, in the first random access preamble group, corresponding to the channel quality of the apparatus; and
different random access preambles in the first random access preamble group correspond to different channel qualities; or at least two random access preambles in the first random access preamble group correspond to different channel qualities.

84. The apparatus according to claim 82, wherein,
the random access preamble used by the msg 1 is a preamble, in the first random access preamble group, corresponding to the repetition number of msg 3 expected by the apparatus; and
different random access preambles in the first random access preamble group correspond to different repetition numbers; or at least two random access preambles in the first random access preamble group correspond to different repetition numbers.

85. An information indication apparatus, **characterized in** being applied to a network device and comprising:
a sending module, configured to send a random access response or scheduling information of the random access response, wherein a repetition number of message (msg) 3 is indicated in the random access response or the scheduling information of the random access response.

86. The apparatus according to claim 85, wherein the random access response comprises: a first bit field; and
the first bit field is used for indicating the repetition number of msg 3.

87. The apparatus according to claim 86, wherein the first bit field comprises: a random access response scheduling grant (RARgrant) field.

88. The apparatus according to claim 87, wherein,
a channel state information request (CSIrequest) field in the RARgrant field is multiplexed to indicate the repetition number of msg 3.

89. The apparatus according to claim 88, wherein,
the CSIrequest field is a first value, and is multiplexed to indicate the repetition number of msg 3 as a first repetition number; or
the CSIrequest field is a second value, and is multiplexed to indicate the repetition number of msg 3 as a second repetition number.

90. The apparatus according to claim 87, wherein,
a physical uplink shared channel (PUSCH) frequency resource allocation field in the RARgrant field comprises partial bits being multiplexed to indicate the repetition number of msg 3.

91. The apparatus according to claim 90, wherein the partial bits are 2 bits;
four different values of the 2 bits are multiplexed to indicate four repetition numbers of msg 3; and
the four different values are the same as the four repetition numbers, respectively; or the four different values are in a correspondence with the four repetition numbers.

92. The apparatus according to claim 90, wherein,
remaining bits, other than the partial bits, in the PUSCH frequency resource allocation field are used for indicating n PRBs; and
a channel state information request (CSIrequest) field in the RARgrant field is a first value, and is multiplexed to indicate that the n PRBs are located in a first position of an uplink bandwidth part (ULBWP); or the CSIrequest field is a second value, and is multiplexed to indicate that the n PRBs are located in a second position of the ULBWP.

93. The apparatus according to claim 87, wherein,
a first bit and a second bit in the RARgrant field are multiplexed to indicate the repetition number of msg 3;
the first bit comprises partial bits in a physical uplink shared channel (PUSCH) frequency resource allocation field of the RARgrant field, and the second bit comprises a bit in a channel state information request (CSIrequest) field of the RARgrant field.

94. The apparatus according to claim 93, wherein the first bit is a high-order bit, and the second bit is a low-order bit; or, the first bit is a low-order bit, and the second bit is a high-order bit.

95. The apparatus according to claim 85, wherein the scheduling information of the random access response comprises: a second bit field; and
the second bit field is multiplexed to indicate the repetition number of msg 3.

96. The apparatus according to claim 95, wherein the scheduling information comprises adopting a downlink control information (DCI), and the second bit field comprises:
multiple bits or multiple bit groups in reserved bits of the DCI, and the multiple bits or the multiple bit groups are in one-to-one correspondence with multiple terminals.

97. The apparatus according to claim 87, wherein,
a first bit in the RARgrant field is used for indicating the repetition number of msg 3; and
a number of bits in the RARgrant field is 27 bits.

98. The apparatus according to claim 97, wherein,
the first bit is a first value, and is used for indicating the repetition number of msg 3 as a first repetition number; or
the first bit is a second value, and is used for indicating the repetition number of msg 3 as a second repetition number.

99. The apparatus according to claim 87, wherein,
a second bit in the RARgrant field is used for indicating the repetition number of msg 3; and
a sum of bits of a physical uplink shared channel (PUSCH) frequency resource allocation field and the second bit in the RARgrant field is less than or equal to 14.

100. The apparatus according to claim 99, wherein the second bit comprises 2 bits;
four different values of the 2 bits are multiplexed to indicate four repetition numbers of msg 3; and
the four different values are the same as the four repetition numbers, respectively; or the four different values are in a correspondence with the four repetition numbers.

101. The apparatus according to claim 99, wherein the PUSCH frequency resource allocation field is used for indicating n PRBs; and
a third bit in the RARgrant field is a first value, and is multiplexed to indicate that the n PRBs are located in a first position of an uplink bandwidth part (ULBWP); or the third bit is a second value, and is multiplexed to indicate that the n PRBs are located in a second position of the ULBWP.

102. The apparatus according to claim 87, wherein,
a first bit and a second bit in the RARgrant field are used for indicating the repetition number of msg 3;
a number of bits in the RARgrant field is 27, and a sum of bits of a physical uplink shared channel (PUSCH) frequency resource allocation field and the second bit in the RARgrant field is less than or equal to 14.

103. The apparatus according to claim 102, wherein the first bit is a high-order bit, and the second bit is a low-order bit; or, the first bit is a low-order bit, and the second bit is a high-order bit.

104. The apparatus according to claim 95, wherein the scheduling information comprises a downlink control information (DCI) using DCI format 1-0, and the second bit field comprises:
multiple bits or multiple bit groups in a fourth bit of the DCI, and the multiple bits or the multiple bit groups are in one-to-one correspondence with multiple terminals; wherein a sum of bits of the fourth bit and reserved bits in the DCI is less than or equal to 16 bits.

105. The apparatus according to claim 96 or 104, further comprising:
a sending module, configured to configure a random access preamble group or a user group to a terminal, thereby enabling the terminal to determine a target bit in the multiple bits or a target bit group in the multiple bit groups.

106. The apparatus according to any one of claims 85 to 105, further comprising:
a receiving module, configured to receive msg 1 in a random access procedure, wherein the msg 1 is multiplexed to indicate at least one of following information:
a terminal requires repeated transmission of the msg 3;
a channel quality of the terminal;
a repetition number of msg 3 expected by the terminal.

107. The apparatus according to claim 106, further comprising:
a processing module, configured to determine, in response to a random access channel resource used by the msg 1 being a resource in a first random access channel resource, that the terminal requires repeated transmission of the msg 3.

108. The apparatus according to claim 107, further comprising:
a processing module, configured to determine the channel quality of the terminal according to the random access channel resource used by the msg 1;
wherein different random access channel resources in the first random access channel resource correspond to different channel qualities; or at least two random access channel resources in the first random access channel resource correspond to different channel qualities.

109. The apparatus according to claim 107, further comprising:
a processing module, configured to determine the repetition number of msg 3 expected by the terminal according to the random access channel resource used by the msg 1;
wherein different random access channel resources in the first random access channel resource correspond to different repetition numbers; or at least two random access channel resources in the first random access channel resource correspond to different repetition numbers.

110. The apparatus according to claim 106, further comprising:
a processing module, configured to determine, in response to a random access preamble used by the msg 1 being a preamble in a first random access preamble group, that the terminal requires repeated transmission of the msg 3.

111. The apparatus according to claim 110, further comprising:
a processing module, configured to determine the channel quality of the terminal according to the random access preamble used by the msg 1;
wherein different random access preambles in the first random access preamble group correspond to different channel qualities; or at least two random access preambles in the first random access preamble group correspond to different channel qualities.

112. The apparatus according to claim 110, further comprising:
a processing module, configured to determine the repetition number of msg 3 expected by the terminal according to the random access preamble used by the msg 1;
wherein different random access preambles in the first random access preamble group correspond to different repetition numbers; or at least two random access preambles in the first random access preamble group correspond to different repetition numbers.

113. A terminal, **characterized in** comprising:
a processor;
a transceiver coupled to the processor; and
a memory configured to store executable instructions of the processor,
wherein the processor is configured to load and execute the executable instructions, thereby implementing the information indication method according to any one of claims 1 to 28.

114. A network device, **characterized in** comprising:
a processor;
a transceiver coupled to the processor; and
a memory configured to store executable instructions of the processor,
wherein the processor is configured to load and execute the executable instructions, thereby implementing the information indication method according to any one of claims 29 to 56.

115. A computer-readable storage medium, **characterized in that**, the computer-readable storage medium stores executable instructions, wherein the executable instructions are loaded and executed by a processor to implement the information indication method according to any one of claims 1 to 56.
